# EUROPEAN PATENT SPECIFICATION

(11) **EP 2 141 066 B1**
(45) Date of publication and mention of the grant of the patent: **20.03.2013**
(21) Application number: 08252243.4
(22) Date of filing: 01.07.2008
(51) Int. Cl.: B62H 5/00, B62K 19/46

(54) **Motorcycle**
Motorrad
Motocyclette

(43) Date of publication of application: 06.01.2010
(73) Proprietor: Yamaha Hatsudoki Kabushiki Kaisha, Shizuoka-ken 438-8501 (JP)
(72) Inventor: Yoshizawa, Akihiro, Iwata-shi Shizuoka-ken 438-8501 (JP)
(74) Representative: Moreland, David

(56) References cited:
- US-A- 5 020 625
- US-A1- 2006 238 295
- US-A1- 2007 285 272

## Description

### FIELD OF THE INVENTION

The invention relates to a motorcycle arranged to allow at least a power supply of a vehicle to be turned on when a code of a driver accords with a code of the vehicle.

### BACKGROUND TO THE INVENTION

Recently, some motorcycles have been arranged to allow a power supply to be turned on when a code of a driver accords with a code of the vehicle, and thereby, to enable an engine to start. For such motorcycles, a locking device has been proposed for a fuel tank cap, for example as described in JP-A-2005-075308. The locking device is provided with an operation knob for locking the cap on a fuel tank side and carrying out a locking releasing operation. The lock device further includes a solenoid for locking the operation knob, and also a lock release means for releasing locking by the solenoid. In the locking device, the release operation of the lock release means is enabled when a code of a driver accords with a code of a vehicle. Further, in the conventional device, an engine is arranged to be prevented from being started in the event that the operation knob locks the cap and the solenoid does not lock the release operation.

Similar systems are shown in US2007/0285272 and US2006/0238295.

In the conventional device described above, an engine cannot start in the case that the operation knob does not lock the cap. Accordingly, running the motorcycle in a state that the cap is not completely locked can be prevented. However, it is possible for the cap to become unlocked during running of the motorcycle. This causes a possibility that, for example, the locking of the cap of the fuel tank by means of the operation knob is released, and thereby, a rumbling of the cap in running causes noise.

In view of the above conventional situation, an object of the invention is to provide a motorcycle capable of preventing the rumbling noise due to release of locking of an opening/closing member in running from occurring.

### SUMMARY OF THE INVENTION

The present invention provides a motorcycle comprising an engine; a power supply, the motorcycle being arranged to allow at least the power supply to be turned on when a code of a user accords with a code of the motorcycle; an opening/closing member provided in a vehicle body; a locking mechanism adapted to releasably lock the opening/closing member relative to the vehicle body;
wherein the locking mechanism comprises an electrically operated lock actuator for locking and unlocking the opening/closing member relative to the vehicle body and an operation switch for instructing the lock actuator to drive, the operation switch being provided in a position away from the opening/closing member, and
opening/closing control means comprising an ECU adapted to prevent unlocking of the opening/closing member when the engine of the motorcycle is not immobilised or a condition for stopping the engine is not satisfied, wherein the ECU is configured to judge whether the engine is immobilised or the condition for stopping the engine is satisfied on the basis of the engine speed and the running speed so that unlocking of the opening/closing member can be prevented when the engine is in operation and running is stopped and in the case of running.

The motorcycle comprises a power supply and is arranged to allow at least the power supply to be turned on when a code of a user or driver accords with a code of the motorcycle. This arrangement may relate to a keyless entry type system.

The opening/closing control means is adapted to prevent the locking mechanism from unlocking the opening/closing member when the engine is running. That is, the engine will be judged not to be immobilized when the engine is running.

The opening/closing control means may permit the opening/closing member to be unlocked when the power supply is turned on and the engine is or is judged to be immobilised.

The locking mechanism comprises a lock actuator for locking and unlocking the opening/closing member relative to the vehicle body.

An operation switch for instructing the lock actuator to drive is provided in a position away or remote from the opening/closing member.

The motorcycle may comprise a scooter type motorcycle having a low footrest part and a leg shield provided so as to cover a front side of the footrest part and the operation switch is provided on an upper part of the leg shield.

The locking mechanism may comprise a key cylinder for locking and unlocking the opening/closing member relative to the vehicle body.

The motorcycle may comprise:
an opening/closing member capable of opening and closing without locking and unlocking by means of the locking mechanism; and
an operation part for opening and closing said opening/closing member.

The opening/closing member capable of opening and closing without locking and unlocking by means of the locking mechanism may be referred to as a simple opening/closing member.

The operation part and an operation switch for instructing the opening/closing member to open and close may be provided adjacent to each other.

The operation part may also be used as an operation switch for instructing the opening/closing member to open and close.

A common operation switch may be provided for instructing a plurality of opening/closing members to open and close, wherein a difference in method of operating the operation switch specifies contents of the instruction. The length of the time for operating the operation switch may specify contents of the instruction.

The operation switch may be provided adjacent to a main switch for switching a power supply of the vehicle on and off.

A cap of a container may located inside the opening/closing member. The cap may be a cap of a fuel container or the like.

The "opening/closing member" in the invention is what requires locking and unlocking for opening and closing and includes, for example, a fuel lid for opening and closing a fuel filling concave part provided with a cap of a fuel tank, a trunk lid for opening and closing an opening of an accessory case provided in a leg shield in the case of a motor scooter and such, a seat for opening and closing a storage box under the seat and the like.

Further, the "locking mechanism" in the invention includes what uses an actuator such as an electric motor and a solenoid to electrically carry out a locking and unlocking operation and what carries out a locking and unlocking operation by a manual key operation of a key cylinder.

Moreover, the "case that a condition for stopping an engine is not satisfied" or the engine is not immobilised in the invention includes a case that an engine is in operation and running is stopping and a case of running.

In accordance with a motorcycle according to the invention, the opening/closing control means prohibits the opening/closing member from being unlocked by the locking mechanism in the case that a condition for stopping an engine is not satisfied, that is, in the case of running, for example. This allows the opening/closing member to be prevented from rumbling or vibrating in running, and thereby, the noise to be prevented from occurring.

### BRIEF DESCRIPTION OF THE DRAWINGS

These and other aspects of the present invention will now be described, by way of example only, with reference to the accompanying drawings, in which:
Fig. 1 is a right side view of a motorcycle in accordance with an embodiment of the invention;
Fig. 2 is a left side view of a main seat and a storage box part in accordance with the embodiment;
Fig. 3 is a right side view showing the arrangement of a lock releasing mechanism in accordance with the embodiment;
Fig. 4 is a rear view showing arrangement of the lock releasing mechanism;
Fig. 5 is a rear view of a handle and the periphery thereof in accordance with the embodiment;
Fig. 6 is a plan view of a storage box and the periphery thereof in accordance with the embodiment;
Fig. 7 is a perspective view of a lock releasing mechanism in accordance with the embodiment;
Fig. 8 is a simplified view of a structure of a lock releasing mechanism in accordance with the embodiment;
Fig. 9 is a side view of a seat locking mechanism in accordance with the embodiment;
Fig. 10 is a sectional and side view (a sectional view taken along a line X-X in Fig. 5) of trunk lid and fuel lid parts in accordance with the embodiment;
Fig. 11 is a sectional and side view (a sectional view taken along a line XI-XI in Fig. 5) of a left lid part in accordance with the embodiment;
Fig. 12 is a sectional and side view (a sectional view taken along a line XII-XII in Fig. 5) of a handle lock button part in accordance with the embodiment; and
Fig. 13 diagrammatically illustrates the arrangement of components in the exemplary embodiment of the invention.

### DETAILED DESCRIPTION OF THE DRAWINGS

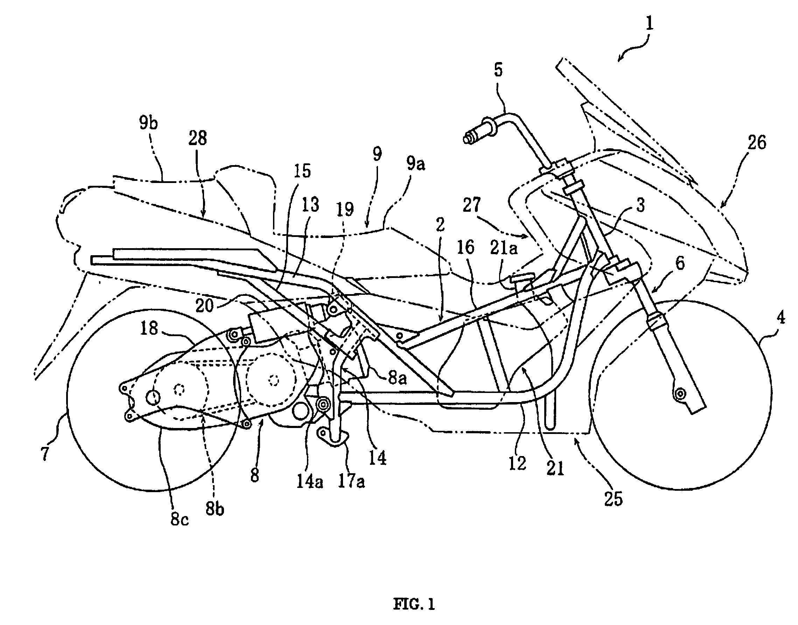

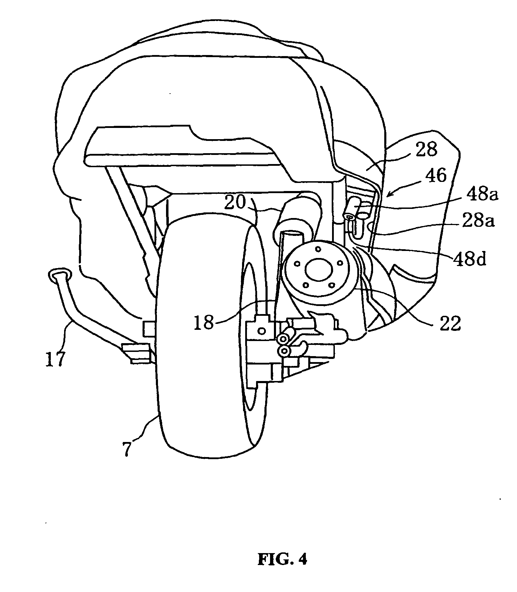

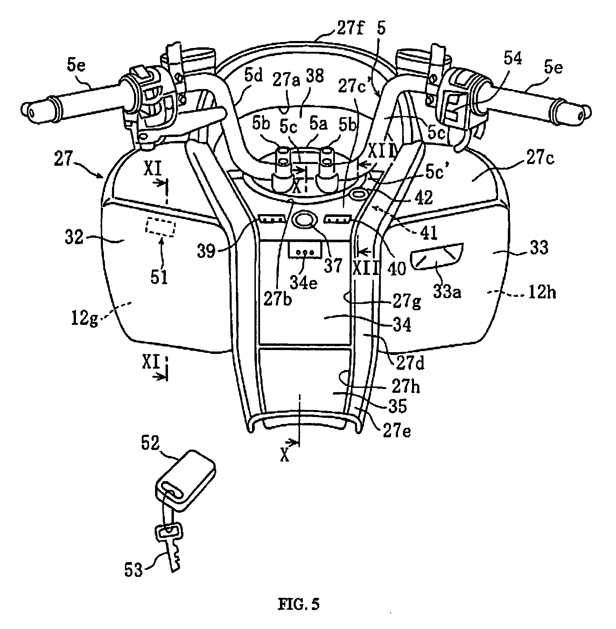

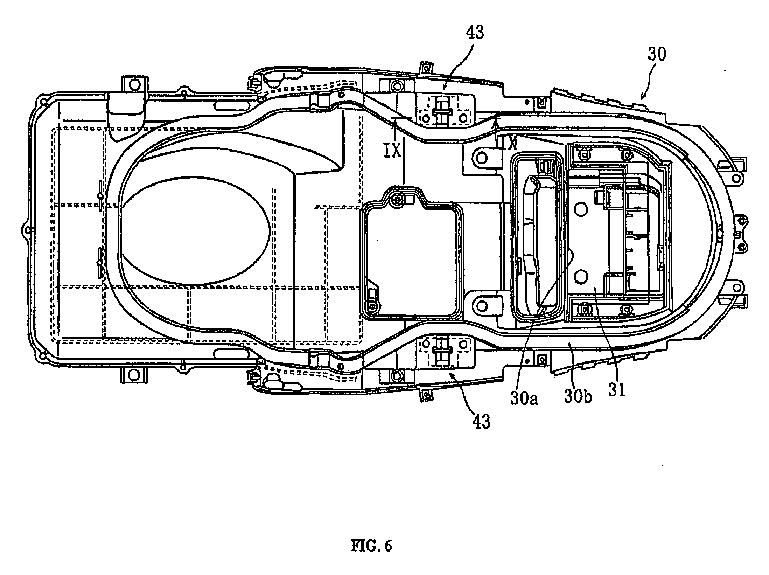

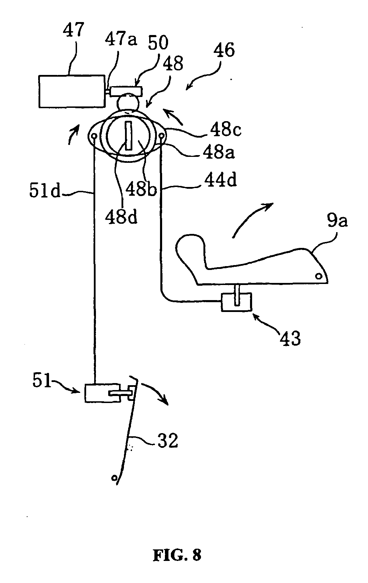

Figs. 1 to 12 illustrate a motorcycle in accordance with an embodiment of the invention. In the description of the embodiment, a back-and-forth direction and a right-and-left direction mean those in view of a rider sitting on a seat.

In the drawings, 1 denotes a scooter type motorcycle. The motorcycle 1 includes a body frame 2 and a front fork 6 which is pivotally supported on a head pipe 3 provided at a front end of the body frame 2. The front fork 6 supports a front wheel 4 in a lower end part thereof and a steering handle 5 in an upper end part thereof. A unit swing type engine unit 8 is supported on the body frame 2 so as to be swingable in the vertical direction and is provided with a rear wheel 7 at a rear end part thereof. A straddle-type seat 9 is provided above and on the rear side of the body frame 2.

The body frame 2 includes right and left down tubes 12, which open in the vehicle width direction and extend from the head pipe 3 downward toward the rear side to extend substantially horizontally toward the rear side from the lower end. The body frame 2 also includes right and left seat rails 13 extending from respective middle parts of the right and left down tubes 12 obliquely upward toward the rear side. The body frame 2 further includes right and left engine suspension members 14, which extend in the vertical direction from respective rear end surfaces of the right and left down tubes 12 and whose upper end parts are connected to respective seat rails 13.

The body frame 2 further includes right and left seat stays 15, which are bridged over the right and left engine suspension members 14 and the seat rails 13 to be connected, and left and right upper tubes 16, which extend obliquely downward toward the rear side from respective connection parts of the right and left down tubes 12 of the head pipe 3 and which are connected to the seat rails 13.

The engine unit 8 is mounted so that a cylinder axis is arranged in a substantially horizontal direction. The engine unit 8 has a structure that an engine body 8a is coupled with a transmission case 8c in which a V-belt type continuously variable transmission 8b is housed. The engine unit 8 is supported so as to swingable in the vertical direction through a pivot shaft member 14a provided in the right and left engine suspension members 14.

A swing arm 18 is provided on the right side of the engine unit 8 with respect to the rear wheel 7. A front end part of the swing arm 18 is connected to the engine unit 8 while a rear end part is connected to the rear wheel 7. The swing arm 18 is connected to a cross pipe 19 for connecting the right and left seat rails 13 by means of a rear suspension 20 provided substantially horizontally in the back-and-forth direction.

A fuel tank 21 is provided in a space enclosed by the right and left down tubes 12 and the right and left upper tubes 16. On an upper wall part of the fuel tank 21 there is formed a fuel filling port 21a so as to extend upward.

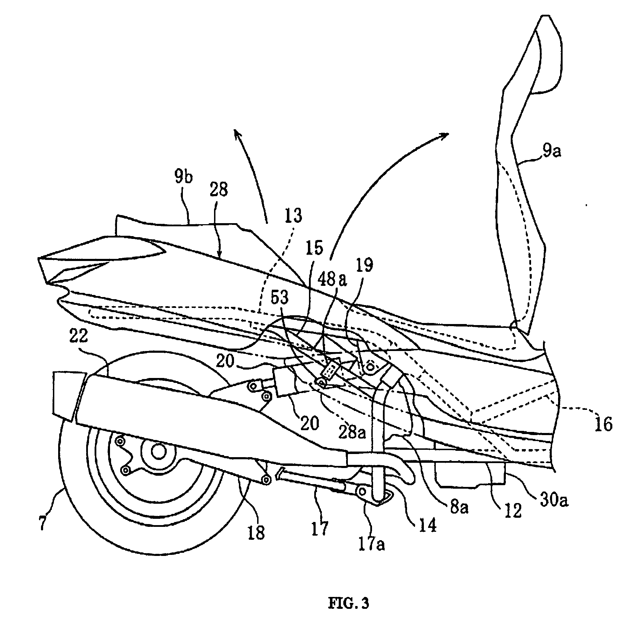

At a lower end part of the right and left engine suspension members 14, a main stand 17 (see Fig. 3) is supported rotatably between a rising position and a housing position through a stand bracket 17a. On the front side of the main stand 17 of the left down tube 12, a side stand (not shown) supported rotatably between the rising position and the housing position for supporting the vehicle body in a state that the body inclines toward the left.

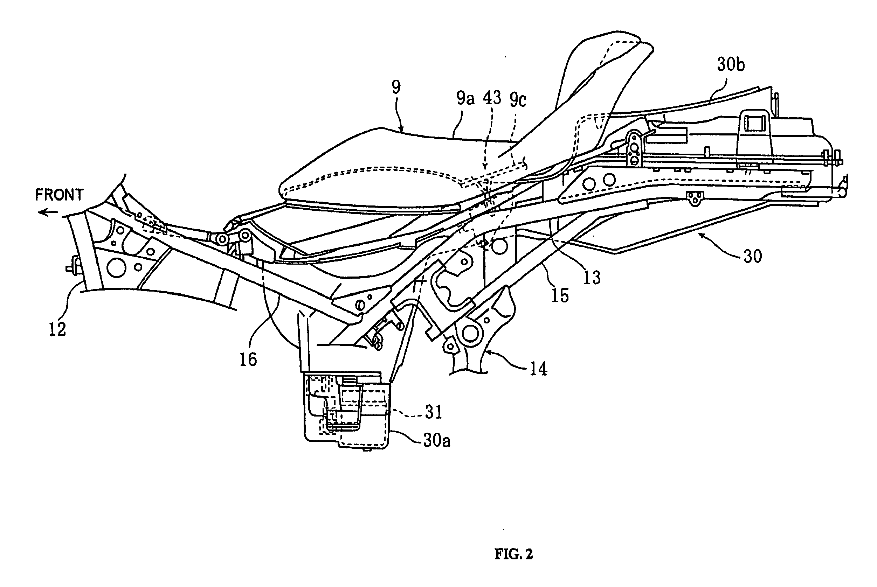

Under the seat 9 there is provided a housing box 30 opening upward (see Fig. 2). An opening edge 30b of the housing box 30 is air-tightly sealed by means of a seal member (not shown) mounted on a bottom plate of the seat 9. The housing box 30 extends substantially over the whole length of the seat 9 in the back-and-forth direction and in a size capable of housing two helmets, golf equipment and a long object such as a bat. A battery housing part 30a in which a battery 31 is housed is formed at a front end part of the housing box 30.

The seat 9 is formed from a main seat 9a and a tandem seat 9b formed separately from the main seat 9a. The main seat 9a is supported rotatably forward about a front end part. The tandem seat 9b is supported rotatably rearward about the rear end part. Opening the main seat 9a and the tandem seat 9b forward and rearward, respectively, causes the whole area of the opening edge 30b of the housing box 30 to be exposed upward.

The motorcycle 1 in accordance with the embodiment includes a body cover 25 provided so as to enclose the body frame 2. The body cover 25 includes a front cover 26 for covering the front side of the head pipe 3, a leg shield 27 provided behind the head pipe 3 for covering the front side of a rider's legs and a side cover 28 for covering a lower peripheral part of the seat 9.

The leg shield 27 has an inclining wall part 27c inclining so that the rear side is lower than the front side. The leg shield 27 also includes a longitudinal wall part 27d extending downward from a rear edge of the inclining wall part 27c and a channel-shaped stride part 27e extending rearward from a lower edge of the longitudinal wall part 27d for covering an upper part and right and left sides of the fuel tank 21. The stride part 27e is concave in the back-and-forth direction of the motorcycle so as to be located at a position lower than the seat 9 to permit the stride part 27e to be easily straddled by a rider when mounting and dismounting. Further, at a front edge of the inclining wall part 27c there is formed a peak part 27f extending upward for covering the front side of a meter unit 38.

At a center part 27c' of the inclining wall part 27c, are formed a meter mounting hole 27a for mounting the meter unit 38 and a bracket hole 27b for providing a handle bracket 5a. The handle bracket 5a is fixed to an upper end of the front fork 6. A center part 5c of the steering handle 5 is fixed to the handle bracket 5a via handle clamps 5b. The steering handle 5 has the center part 5c, a rising part 5d connected to the center part 5c to rising upward and a grip part 5e connected to the rising part 5d to extend substantially horizontally again.

On the right and left outer sides of the longitudinal wall part 27d of the leg shield 27, right and left housing concave parts 12g and 12h are formed so as to expand forward. The right and left housing concave parts 12g and 12h are covered with right and left lids 32 and 33, respectively, so as to be able to open and close.

A lower end part of the right lid 33 is pivotally supported on a pin so as to be rotatable while an engaging mechanism for engaging the right lid 33 with the inclining part 27c of the leg shield 27 is provided at an upper end part of the right lid 33, although they are not shown. The engaging mechanism is automatically engaged by manually rotating the right lid 33 to a closed position while the engagement can be released by pulling a knob 33a.

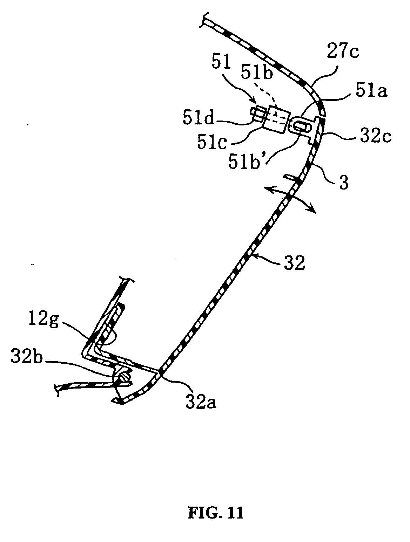

On the other hand, the left lid 32 is arranged that a lower end part 32a thereof is pivotally supported on a pin 32b (see Fig. 11) and an upper end part 32c is rotatable rearward about the pin 32b. On an inner surface of the upper end part 32c of the left lid 32 there is provided a left lid locking mechanism 51 capable of releasing locking by means of a later-mentioned actuator and key operation.

The left lid locking mechanism 51 includes a ring-shaped hook member 51a fixed to a back surface of the upper end part 32c of the left lid 32, a lock member 51b having at a top end part thereof a hook-shaped lock claw 51b' for engaging with and disengaging from the hook member 51a and a bracket 51c for rotatably supporting the lock member 51b. The lock member 51b is urged to a locking direction. A side opposite to the lock claw of the lock member 51b is connected to a wire cable 51d for carrying out a lock release operation.

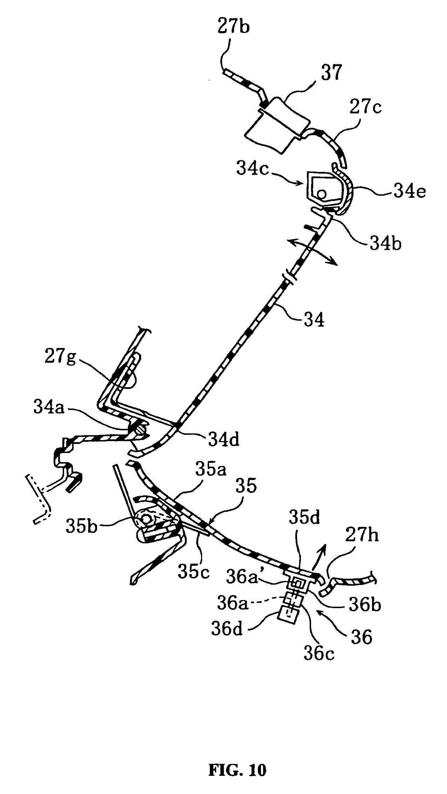

Moreover, in the longitudinal wall part 27d there is formed a trunk concave part 27g the size over the substantially whole area of the longitudinal wall part 27d so as to expand forward. An opening of the trunk concave part 27g is covered with a trunk lid 34 so as to be able to open and close. The trunk lid 34 is supported so that a lower edge 34d (see Fig. 10) is swingable in the back-and-forth direction about a hinge pin 34a. An upper edge 34b is provided with an engaging mechanism 34c. The upper end 34b of the trunk lid 34 is arranged to be able to engage with the inclining wall part 27c through a knob 34e of the engaging mechanism 34c. The engaging mechanism 34c is arranged to automatically engage by manually rotating the trunk lid 34 to a close position and to be able to release the engagement by depressing the knob 34e.

A rectangular opening 27h is formed in a part of the stride part 27e, the part facing the fuel filling port 21a of the fuel tank. A fuel lid 35 is provided in the opening 27h. A front edge 35a of the fuel lid 35 is supported so as to be rotatable in the vertical direction about a hinge pin 35b and is urged to an opening direction by means of a spring 35c.

A rear edge 35d of the fuel lid 35 is provided with a fuel lid locking mechanism 36. The fuel lid locking mechanism 36 comprises a hook member 36b fixed to an inner surface of the rear edge 35d of the fuel lid 35, a lock member 36a having a lock claw 36a' capable of engaging with and disengaging from the hook member 36, a bracket 36c for rotatably supporting the lock member 36a and a solenoid 36d for rotating the lock member 36a in a direction for releasing locking.

Rotating the fuel lid 35 to the closed position causes the lock claw 36a' of the lock member 36a to automatically engage with the hook member 36b, so that the fuel lid 35 is locked in the closed position. On the other hand, turning on the solenoid 36d causes the solenoid 36d to rotate the lock member 36a in the direction for releasing locking to release locking, so that the fuel lid 35 rises a little by means of the spring 35c.

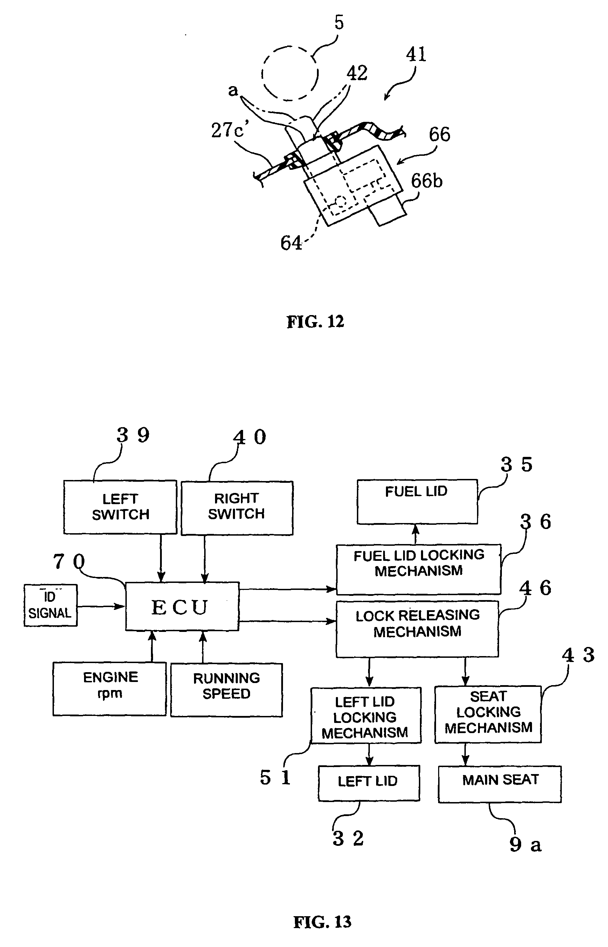

Under a right edge of the handle insertion hole 27b of the inclining wall part 27c there is provided a handle locking mechanism 41. The handle locking mechanism 41 is arranged so that pushing a handle lock button 42 while the steering handle 5 is turned to either of the right and left directions, to the left in the embodiment, would cause a lock pin 64 (see Fig. 12) to engage with a lock hole on a vehicle body side, and thereby, to lock the steering handle 5 at a position of an angle of the rotation. Further, rotating a cam mechanism 66 by means of a motor 66b in accordance with a handle lock release signal allows the handle lock button 42 to move to a lock release position. The handle lock button 42 is thus moved to the lock release position by means of a return spring (not shown).

As shown in Fig. 12, an upper end surface "a" of the handle lock button 42 is at the height substantially same as that of an upper surface of the center part 27c' of the inclining wall part 27c of the leg shield 27 in a state of locking (a state shown by a solid line in Fig. 12). In a state of releasing locking (a state shown by a double-dotted line in Fig. 12), the upper end surface "a" projects upward from the center part 27c'. This allows judgment of the state of locking or unlocking to be easily carried out.

Moreover, the handle lock button 42 is located under a corner part 5c' between the center part 5c and the right rising part 5d of the steering handle 5. The location is behind the corner part 5c' and is a little difficult to be seen while it is easily seen when the steering handle 5 is turned to the left, in view from an upper side in riding.

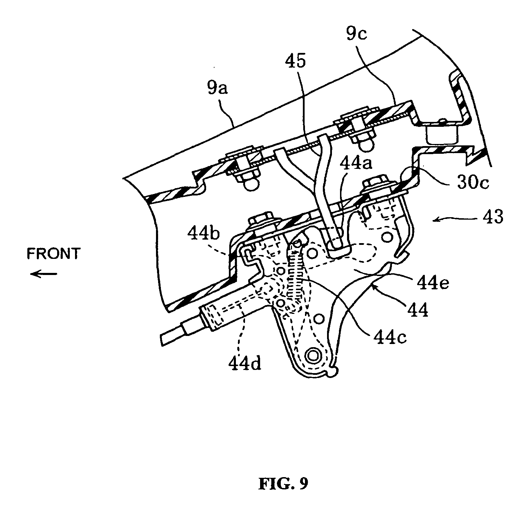

The main seat 9a is provided with a seat locking mechanism 43 (see Fig. 9) for locking the main seat 9a in a position where the housing box 30 is closed. The seat locking mechanism 43 includes a lock body 44, which is fixed to a mounting pedestal 30c formed on an outer side of an edge of the opening 30b of the housing box 30, and a striker (a locked member) 45, which is fixed to a bottom plate 9c of the main seat 9a. The lock body 44 includes a support bracket 44e fixed to the mounting pedestal 30c, an engaging claw 44a supported rotatably between a lock position where the striker 45 engages with the bracket 44e and an unlock position where locking is released, a link bar 44b for turning the engaging claw 44a to the unlock position and a coil spring 44c for urging the engaging claw 44a to a locking direction or an unlocking direction in accordance with a position of the rotation angle of the engaging claw 44a. That is to say, the coil spring 44c urges the engaging claw 44a to the locking direction when the engaging claw 44a is located at the locking position shown by a solid line in Fig. 9. On the other hand, the coil spring 44c urges the engaging claw 44a to the unlocking direction when the engaging claw 44a is located at the unlocking position rotated by 90 degrees in a counterclockwise from a state shown in Fig. 9.

The link bar 44b is connected to the wire cable 44d. The wire cable is connected to the lock releasing mechanism 46.

The lock releasing mechanism 46 is for making locking of the left lid locking mechanism 51 and the seat locking mechanism 43 releasable by means of both an actuator and a manual operation.

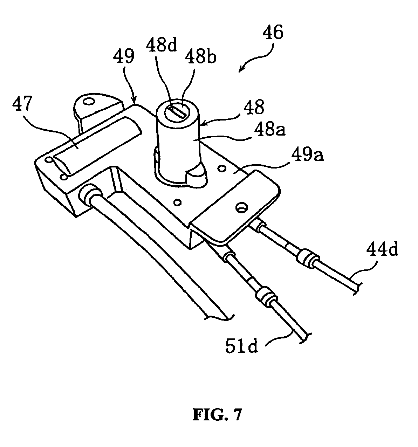

The lock releasing mechanism 46 is formed from an electric motor (an actuator) 47 (see Fig. 7) and a key cylinder 48, which are formed into one body by means of a common casing 49. The electric motor 47 is housed in a box-shaped case body 49a of the casing 49. The key cylinder 48 is fixed to the case body 49a so as to project upward from an upper surface of the case body 49a. An axial line of the key cylinder 48 makes a right angle with an axial line of the electric motor 47 in view from a wire cables 44d and 51d side in Fig. 7. The key cylinder 48 includes a column-shaped cylinder 48a and a rotation body 48b rotatably inserted into the cylinder 48a. 48d denotes a key insertion hole.

At a lower end of the rotation body 48b there is fixed an arm member 48c provided in the case body 49a. One end of the arm member 48c is connected to the wire cable 44d for the main seat 9a. The other end is connected to one end of the wire cable 51d for the left lid 32.

Rotation of a rotation shaft 47a of the electric motor 47 is transmitted to the arm member 48c through a worm gear 50.

The lock releasing mechanism 46 is fixed to the right seat stay 15 of the body frame 2. The seat stay 15 is covered with the side cover 28 from the outer side in the vehicle width direction. Accordingly, the lock releasing mechanism 46 is provided on the inside of the side cover 28. This causes the lock releasing mechanism 46 to be enclosed by the side cover 28 located on the outer side in the vehicle width direction, the rear suspension 20 located on the inner side in the vehicle width direction and a muffler 22 located on a lower side. Therefore, muddy water or the like can be prevented from splashing the lock releasing mechanism 46 when running.

Further, the lock releasing mechanism 46 is mounted to the seat stay 15 so that the key insertion hole 48d of the key cylinder 48 would be faced obliquely downward toward the rear side, so that the key insertion hole 48d is pointed to the outer side of the lower opening 28a of the side cover 28. This allows a key operation in which the key 53 is inserted into the key insertion hole 48d from the outer side of the side cover 28 to rotate the key 53 to be easily carried out while the lock releasing mechanism 46 is provided on the inner side of the side cover 28.

Moreover, the motorcycle 1 in accordance with the embodiment includes a side stand on the left side in the vehicle width direction although this is not shown in the drawings. This causes the vehicle body to incline to the left in using the side stand. Accordingly, the key insertion hole 48d of the key cylinder 48a is located on a side opposite to the inclination. The key operation is made further easier also from this point of view.

A main switch 37 is provided in a part on the rear side of the handle insertion hole 27b of the inclining wall part 27c' at the center part. A left switch 39 and a right switch 40 are provided on the left and right sides of the main switch 37, respectively.

Reference is now made to Fig. 13 of the drawings. The fuel lid 35, the left lid 32 and the main seat 9a correspond to the "opening/closing member" in the invention.

The fuel lid locking mechanism 36 for locking and unlocking the fuel lid 35, the left lid locking mechanism 51 for the left lid 32 and the lock releasing mechanism 46 for unlocking the seat locking mechanism 43 for the main seat 9a correspond to the "locking mechanism" in the invention.

Further, the ECU 70 in the embodiment has a function of prohibiting the respective locking mechanisms from unlocking the respective opening/closing members in the case that the condition for stopping or immobilising an engine is not satisfied, in the case of running, for example, and allowing the respective locking mechanisms to unlock the respective opening/closing members when the power supply is turned on since it is judged that the condition for stopping or immobilizing an engine is satisfied. The ECU 70 corresponds to the "opening/closing control member" in the invention.

Moreover, the left switch 39 and the right switch 40 are for instructing an actuator forming each locking mechanism to drive and correspond to the "operation switch" in the invention.

Furthermore, the trunk lid 34 and the right lid 33 are capable of opening and closing without any locking or unlocking operation by means of the locking mechanism. The trunk lid 34 and the right lid 33 may each be defined as a "simple opening/closing member". The knobs 34e and 33a of the respective lids 34 and 33 are for opening and closing the respective simple opening/closing members and correspond to the "operation part" in the invention. The right switch 40 is for instructing the fuel lid 35 to be unlocked in the case of depressing for a comparatively long time and instructing the main seat 9a to be unlocked in the case of depressing for a short time. The right switch 40 corresponds to the "common operation switch for instructing the plural opening/closing members to open and close" in the invention.

In addition, the cap 21a of the fuel tank 21 in the embodiment corresponds to the "cap of a container" in the invention.

The motorcycle 1 in accordance with the embodiment comprises a smart key system. In the smart key system, an ID inquiry whether an ID signal (a code of a driver or user) from a mobile transmitter 52 carried by a rider accords with a pre-registered ID code (a code of a vehicle) or not is started when the rider depresses or activates the main switch 37. In the case of accordance, a main power supply is turned on, and thereby, locking of the handle by means of the handle locking mechanism 41 is released, so that the handle lock button 42 projects upward from the center part 27c' of the inclining wall part 27c to create the unlock state. Pushing a starter button 54 provided in the grip part 5e of the steering handle 5 in this state causes the engine to start.

Pushing the right switch 40 provided at the center part 27c' of the inclining wall part 27c for a comparatively long time (one second or more, for example) causes the solenoid 36d of the fuel lid locking mechanism 36 to turn on and locking of the fuel lid 35 to be released, so that fueling can be performed.

Pushing the right switch 40 for a comparatively short time (less than one second, for example) causes the electric motor 47 of the lock releasing mechanism 46 to rotate. This causes the arm member 48c to rotate counterclockwise to transmit the rotation of the arm member 48c to the seat locking mechanism 43 of the main seat 9a through the wire cable 44d, so that locking of the seat by means of the seat locking mechanism 43 is released. On the other hand, pushing the left switch 39 causes the electric motor 47 of the lock releasing mechanism 46 to rotate the arm member 48c clockwise, and thereby, locking of the lid locking mechanism 51 of the left lid 32 is released.

On the other hand, the ECU 70 judges whether the condition for stopping or immobilising an engine is satisfied or not on the basis of the engine speed, the running speed and the like. In the case that the condition for stopping an engine is not satisfied, unlocking by means of the respective locking mechanisms is prohibited even when a rider or the like operates to press the left and right switches 39 and 40 for the purpose of releasing locking by means of the respective locking mechanisms.

In order to release locking of the main seat 9a in the case that locking cannot be released by means of the electric motor 47 because of an excessive discharge of the battery 31, the key 53 is inserted into the key hole 48d of the key cylinder 48 of the lock releasing mechanism 46 to rotate the key 53 counterclockwise. Then, the rotation of the arm member 48c is transmitted to the seat locking mechanism 43 through the wire cable 44d to release locking of the main seat 9a. This allows the main seat 9a to be opened for taking out a contained object and the battery 31 to be charged. The key 53 is turned clockwise in order to open the left lid 32. This causes the rotation of the arm member 48c to be transmitted to the lid locking mechanism 51 through the wire cable 51d to release locking of the left lid 32, so that a contained object can be taken out.

As described above, in accordance with the embodiment, the ECU (the opening/closing control means) 70 prohibits the respective locking mechanisms 36, 46, 51 and 43 from unlocking the respective lids 35, 32 and the seat 9a in the case that the condition for stopping or immobilising an engine is not satisfied, that is, in the case that the engine is in operation when the motorcycle is stationary or is running, for example. This allows the lid and such to be prevented from rumbling or vibrating when running, and thereby, the associated noise to be prevented from occurring.

Further, the ECU 70 prohibits the unlocking operation in running since it is judged that the condition for stopping an engine is not satisfied while it allows the unlocking operation when the power supply is turned on since the condition for stopping an engine is judged to be satisfied. This allows the noise in running to be prevented from occurring and the left lid 32 and the main seat 43 to be opened by a key operation when the power supply is off, so that stored goods can be putted in and out.

Moreover, the left and right switches 39 and 40 for instructing the respective lids 32 and 35 and the main seat 9a to be unlocked are provided in positions away from the respective lids and the main seat. Accordingly, interference with other components mounted to the vehicle can be easily prevented, so that operational performance can be made excellent.

The left and right operation switches 39 and 40 are provided in the inclination wall part 27c located in the upper part of the leg shield 27. This allows a rider sitting on the seat to easily access the switches.

The opening/closing knob 34e of the trunk lid 34, which requires no locking and unlocking operation by means of the locking mechanism, is provided adjacent to the left and right switches 39 and 40 for instructing the respective lids and such to open and close. This allows opening and closing operations of the respective lids and such to be carried out in one place. The operational performance can be improved also from this point of view.

Further, one common right switch 40 is used both as the operation switch for unlocking the fuel lid 35 and the operation switch for unlocking the main seat 9a to instruct which is unlocked in accordance with the length of the time for operation. This allows the structure to be simplified without deteriorating operational performance since the number of operation switches is small.

The opening/closing member, the locking mechanism and the case that the condition for stopping an engine is not satisfied in the invention are not limited to those in the embodiment.

Moreover, the operation knob 34e and the operation knob 33a of the right lid 33 for opening and closing the trunk 34 as a simple opening/closing member capable of opening and closing with no locking or unlocking operation may be also used for the operation switches 39 and 40 for instructing an unlocking operation.

### Description of the Reference Numerals and Signs

1: MOTORCYCLE
2: BODY FRAME
28: SIDE COVER (BODY COVER)
28a: OPENING PART OF BODY COVER
31: BATTERY
32, 9a: LEFT LID, MAIN SEAT (FIRST AND SECOND OPERATION SUBJECT MEMBER)
32, 9a: LEFT LID, MAIN SEAT (OPENING/CLOSING MEMBER)
43, 51: SEAT LOCKING MECHANISM, LID LOCKING MECHANISM
44d, 51d: WIRE CABLE (CONNECTION MEMBER)
47: ELECTRIC MOTOR (ACTUATOR)
48: KEY CYLINDER
48d: KEY HOLE
49: HOUSING
52: TRANSMITTER (OPERATION MEMBER)
53: KEY
70: ECU (OPENING/CLOSING CONTROL MEANS)

## Claims

1. A motorcycle (1) comprising:
an engine (8);
a power supply, the motorcycle being arranged to allow at least the power supply to be turned on when a code of a user accords with a code of the motorcycle (1);
an opening/closing member (9a) provided in a vehicle body;
a locking mechanism (46) adapted to releasably lock the opening/closing member (9a) relative to the vehicle body;
wherein the locking mechanism (46) comprises an electrically operated lock actuator (47) for locking and unlocking the opening/closing member (9a) relative to the vehicle body and an operation switch (40) for instructing the lock actuator (47) to drive, the operation switch (40) being provided in a position away from the opening/closing member (9a), and
opening/closing control means comprising an ECU (70) adapted to prevent unlocking of the opening/closing member (9a) when the engine (8) of the motorcycle (1) is not immobilised or a condition for stopping the engine (8) is not satisfied, wherein the ECU (70) is configured to judge whether the engine (8) is immobilised or the condition for stopping the engine (8) is satisfied on the basis of the engine speed and the running speed so that unlocking of the opening/closing member (9a) can be prevented when the engine (8) is in operation and running is stopped and in the case of running.

2. The motorcycle (1) according to Claim 1, wherein the opening/closing control means (70) is adapted to prevent the locking mechanism (46) from unlocking the opening/closing member (9a) when the engine (8) is running.

3. The motorcycle (1) according to Claim 1, or 2, wherein the opening/closing control means (70) is configured to permit the opening/closing member (9a) to be unlocked when the power supply is turned on and the engine (8) is immobilised.

4. The motorcycle (1) according to Claim 1, wherein the motorcycle (1) is a scooter type motorcycle having a low footrest part and a leg shield (27) provided so as to cover a front side of the footrest part and the operation switch (40) is provided on an upper part of the leg shield (27).

5. The motorcycle (1) according to any preceding Claim, wherein the locking mechanism (46) comprises a key cylinder (48) for locking and unlocking the opening/ closing member (9a) relative to the vehicle body.

6. The motorcycle (1) according to any preceding Claim, comprising:
a simple opening/closing member (34) capable of opening and closing without locking and unlocking by means of the locking mechanism (46); and
an operation part (34e) for opening and closing the simple opening/closing member (34).

7. The motorcycle (1) according to Claim 6, wherein the operation part (34e) and the operation switch (40) for instructing the opening/ closing member (9a) to open and close are provided adjacent to each other.

8. The motorcycle (1) according to Claim 6, wherein the operation part is also adapted to be used as an operation switch fcr instructing the opening/closing member to open and close.

9. The motorcycle (1) according to any preceding Claim, comprising a common operation switch (40) for instructing a plurality of opening/closing members (9a, 32) to open and close, wherein the common operation switch is configured so that a difference in method of operating the common operation switch (40) specifies contents of the instruction.

10. The motorcycle (1) according to Claim 9, wherein the common operation switch is configured so that the length of the time for operating the common operation switch (40) specifies contents of the instruction.

11. The motorcycle (1) according to Claim 4, wherein the operation switch (40) is provided adjacent to a main switch (37) for switching the power supply of the vehicle on and off.

12. The motorcycle (1) according to any preceding Claim, wherein a cap of a container is located inside the opening/closing member.

## Patentansprüche

1. Motorrad (1), das aufweist:
einen Motor (8);
eine Stromversorgung, wobei das Motorrad ausgebildet ist, dass es gestattet, dass mindestens die Stromversorgung eingeschaltet wird, wenn ein Code eines Benutzers mit einem Code des Motorrades (1) übereinstimmt;
ein Öffnungs/Schließelement (9a), das in einer Fahrzeugkarosserie vorhanden ist;
einen Verriegelungsmechanismus (46), der ausgebildet ist, um das Öffnungs/Schließelement (9a) relativ zur Fahrzeugkarosserie lösbar zu verriegeln;
wobei der Verriegelungsmechanismus (46) ein elektrisch betätigtes Verriegelungsbetätigungselement (47) für das Verriegeln und Entriegeln des Öffnungs/Schließelementes (9a) relativ zur Fahrzeugkarosserie und einen Betriebsschalter (40) dafür aufweist, dass das Verriegelungsbetätigungselement (47) die Anweisung zum Fahren erhält, wobei der Betriebsschalter (40) in einer Position weg vom Öffnungs/Schließelement (9a) bereitgestellt wird; und
eine Öffnungs/Schließsteuereinrichtung, die ein elektronisches Steuergerät (70) aufweist, das ausgebildet ist, um zu verhindern, dass das Öffnungs/Schließelement (9a) entriegelt wird, wenn der Motor (8) des Motorrades (1) nicht unbeweglich ist oder ein Zustand für das Anhalten des Motors (8) nicht erfüllt wird, wobei das elektronische Steuergerät (70) so ausgebildet ist, dass es beurteilt, ob der Motor (8) unbeweglich ist oder der Zustand für das Anhalten des Motors (8) erfüllt wird, basierend auf der Motordrehzahl und der Fahrgeschwindigkeit, so dass das Entriegeln des Öffnungs/Schließelementes (9a) verhindert werden kann, wenn der Motor (8) in Betrieb ist und das Fahren gestoppt wird, und im Fall des Fahrens.

2. Motorrad (1) nach Anspruch 1, bei dem die Öffnungs/Schließsteuereinrichtung (70) so ausgebildet ist, dass verhindert wird, dass der Verriegelungsmechanismus (46) das Öffnungs/Schließelement (9a) entriegelt, wenn der Motor (8) läuft.

3. Motorrad (1) nach Anspruch 1 oder 2, bei dem die Öffnungs/Schließsteuereinrichtung (70) so ausgebildet ist, dass das Öffnungs/Schließelement (9a) entriegelt werden darf, wenn die Stromversorgung eingeschaltet und der Motor (8) unbeweglich ist.

4. Motorrad (1) nach Anspruch 1, bei dem das Motorrad (1) ein Motorroller mit einem niedrigen Fußstützenteil und einem Beinschutz (27) ist, so bereitgestellt, dass eine Vorderseite des Fußstützenteils bedeckt wird, und wobei der Betriebsschalter (40) an einem oberen Teil des Beinschutzes (27) vorhanden ist.

5. Motorrad (1) nach einem der vorhergehenden Ansprüche, bei dem der Verriegelungsmechanismus (46) einen Schlüsselzylinder (48) für das Verriegeln und Entriegeln des Öffnugns/Schließelementes (9a) relativ zur Fahrzeugkarosserie aufweist.

6. Motorrad (1) nach einem der vorhergehenden Ansprüche, das aufweist:
ein einfaches Öffnungs/Schließelement (34), das öffnen und schließen kann, ohne mittels des Verriegelungsmechanismus (46) zu verriegeln und zu entriegeln; und
ein Funktionsteil (34e) für das Öffnen und Schließen des einfachen Öffnungs/Schließelementes (34).

7. Motorrad (1) nach Anspruch 6, bei dem das Funktionsteil (34e) und der Betriebsschalter (40) für das Anweisen des Öffnungs/Schließelementes (9a) zum Öffnen und Schließen benachbart zueinander vorhanden sind.

8. Motorrad (1) nach Anspruch 6, bei dem das Funktionsteil ebenfalls so ausgebildet ist, dass es als ein Betriebsschalter für das Anweisen des Öffnungs/Schließelementes zum Öffnen und Schließen verwendet wird.

9. Motorrad (1) nach einem der vorhergehenden Ansprüche, das einen gemeinsamen Betriebsschalter (40) dafür aufweist, dass eine Vielzahl von Öffnungs/Schließelementen (9a, 32) die Anweisung zum Öffnen und Schließen erhält, wobei der gemeinsame Betriebsschalter so ausgebildet ist, dass ein Unterschied bei der Betätigungsweise des gemeinsamen Betriebsschalters (40) den Inhalt der Anweisung spezifiziert.

10. Motorrad (1) nach Anspruch 9, bei dem der gemeinsame Betriebsschalter so ausgebildet ist, dass die Zeitdauer für das Betätigen des gemeinsamen Betriebschalters (40) den Inhalt der Anweisung spezifiziert.

11. Motorrad (1) nach Anspruch 4, bei dem der Betriebsschalter (40) benachbart einem Hauptschalter (37) für das Ein- und Ausschalten der Stromversorgung des Fahrzeuges vorhanden ist.

12. Motorrad (1) nach einem der vorhergehenden Ansprüche, bei dem eine Kappe eines Behälters innerhalb des Öffnungs/Schließelementes angeordnet ist.

## Revendications

1. Motocyclette (1), comprenant:
un moteur (8) ;
une alimentation en énergie, la motocyclette étant agencée de sorte à permettre de brancher au moins l'alimentation en énergie lorsqu'un code d'un utilisateur est conforme à un code de la motocyclette (1) ;
un élément d'ouverture/de fermeture (9a) agencé dans une carrosserie du véhicule ;
un mécanisme de verrouillage (46), adapté pour verrouiller de manière amovible l'élément d'ouverture/de fermeture (9a) par rapport à la carrosserie du véhicule ;
le mécanisme de verrouillage (46) comprenant un actionneur de verrou à actionnement électrique (47), pour verrouiller et déverrouiller l'élément d'ouverture/de fermeture (9a) par rapport à la carrosserie du véhicule, et un interrupteur opérationnel (40), pour transmettre une instruction d'entraînement à l'actionneur du verrou (47), l'interrupteur opérationnel (40) étant agencé dans une position située à l'écart de l'élément d'ouverture/de fermeture (9a) ; et
un moyen de commande de l'ouverture/de la fermeture, comprenant une unité de commande électronique (ECU) (70), adaptée pour empêcher le déverrouillage de l'élément d'ouverture/de fermeture (9a) lorsque le moteur (8) de la motocyclette (1) n'est pas immobilisé ou si une condition d'arrêt du moteur (8) n'est pas satisfaite, dans laquelle l'unité de commande électronique (70) est configurée de sorte à déterminer si le moteur (8) est immobilisé ou si la condition d'arrêt du moteur (8) est satisfaite ou non, sur la base de la vitesse du moteur et de la vitesse de roulement, de sorte que le déverrouillage de l'élément d'ouverture/de fermeture (9a) peut être empêché dans le cas où le moteur (8) fonctionne, le roulement étant arrêté, et dans le cas du roulement.

2. Motocyclette (1) selon la revendication 1, dans laquelle le moyen de commande de l'ouverture/de la fermeture (70) est adapté pour empêcher le mécanisme de verrouillage (46) de déverrouiller l'élément d'ouverture/de fermeture (9a) lorsque le moteur (8) fonctionne.

3. Motocyclette (1) selon la revendication 1 ou 2, dans laquelle le moyen de commande de l'ouverture/de la fermeture (70) est configuré de sorte à permettre le déverrouillage de l'élément d'ouverture/de fermeture (9a) lorsque l'alimentation en énergie est branchée, le moteur (8) étant immobilisé.

4. Motocyclette (1) selon la revendication 1, dans laquelle la motocyclette (1) est une motocyclette de type scooter, comportant une partie de repose-pieds basse et un protège-jambes (27), agencé de sorte à couvrir un côté avant de la partie de repose-pieds, l'interrupteur opérationnel (40) étant agencé sur une partie supérieur du protège-jambes (27).

5. Motocyclette (1) selon l'une quelconque des revendications précédentes, dans laquelle le mécanisme de verrouillage (46) comprend un barillet de serrure (48) pour verrouiller et déverrouiller l'élément d'ouverture/de fermeture (9a) par rapport à la carrosserie du véhicule.

6. Motocyclette (1) selon l'une quelconque des revendications précédentes, comprenant :
un élément d'ouverture/de fermeture simple (34), capable d'assurer l'ouverture et la fermeture sans verrouillage et déverrouillage par l'intermédiaire du mécanisme de verrouillage (46) ; et
une partie opérationnelle (34e) pour ouvrir et fermer l'élément d'ouverture/de fermeture simple (34).

7. Motocyclette (1) selon la revendication 6, dans laquelle la partie opérationnelle (34e) et l'interrupteur opérationnel (40), destiné à transmettre à l'élément d'ouverture/de fermeture (9a) une instruction d'ouverture et de fermeture, sont agencés de manière adjacente l'un à l'autre.

8. Motocyclette (1) selon la revendication 6, dans laquelle la partie opérationnelle est en outre adaptée pour servir d'interrupteur opérationnel, pour transmettre à l'élément d'ouverture/de fermeture une instruction d'ouverture et de fermeture.

9. Motocyclette (1) selon l'une quelconque des revendications précédentes, comprenant un interrupteur opérationnel commun (40), pour transmettre à plusieurs éléments d'ouverture/de fermeture (9a, 32) une instruction d'ouverture et de fermeture, l'interrupteur opérationnel commun étant configuré de sorte qu'une différence dans le procédé d'actionnement de l'interrupteur opérationnel commun (40) spécifie le contenu de l'instruction.

10. Motocyclette (1) selon la revendication 9, dans laquelle l'interrupteur opérationnel commun est configuré de sorte que la durée d'actionnement de l'interrupteur opérationnel commun (40) spécifie le contenu de l'instruction.

11. Motocyclette (1) selon la revendication 4, dans laquelle l'interrupteur opérationnel (40) est agencé près d'un interrupteur principal (37) pour débrancher et débrancher l'alimentation en énergie du véhicule.

12. Motocyclette (1) selon l'une quelconque des revendications précédentes, dans laquelle un capuchon d'un conteneur est agencé à l'intérieur de l'élément d'ouverture/de fermeture.
